# DEMANDE DE BREVET EUROPEEN

(11) **EP 0 892 360 A1**
(43) Date de publication de la demande: **20.01.1999**
(21) Numéro de dépôt: 98410080.0
(22) Date de dépôt: 13.07.1998
(51) Int. Cl.: G06K 9/22, G06K 9/18

(54) **Procédé de reconnaissance de caractères manuscrits**

(30) Priorité: 15.07.1997 FR 9709189
(71) Demandeur: Eolas, 38000 Grenoble (FR)
(72) Inventeur: Lagarde, Georges, 38100 Grenoble (FR); Dulac, Gérald, 38000 Grenoble (FR)
(74) Mandataire: de Beaumont, Michel

(57) **Abrégé**

L'invention concerne un dispositif qui facilite le tracé, avec le doigt ou à l'aide d'un stylet, de symboles d'écriture identifiables sans apprentissage. Il est caractérisé en ce que sur la surface de tracé sont disposées un petit nombre de zones de détection (1-9) qui sont visibles et perceptibles par le toucher. Lorsque l'utilisateur touche une des zones de détection, un signal permettant de déterminer la zone touchée est émis. Un autre signal indique les instants où débute et se termine le tracé. L'utilisateur n'a le choix qu'entre un petit nombre de tracés, clairement distincts les uns des autres, dont la signification est sans ambiguïté. Le dispositif selon l'invention est destiné à des applications où l'utilisation d'un clavier ne serait pas appropriée.

## Description

La présente invention concerne un procédé de reconnaissance de caractères manuscrits, notamment du type où un utilisateur est contraint de suivre des repères visibles sur le support d'écriture.

Les systèmes de reconnaissance de caractères manuscrits sont généralement utilisés dans des appareils où, pour des raisons de manque de place, on ne souhaite pas installer un clavier.

Les systèmes de reconnaissance de caractères les plus courants comportent un capteur matriciel de résolution élevée, destiné à numériser avec précision le tracé exécuté par l'utilisateur. Le tracé numérisé est ensuite analysé par un procédé de reconnaissance de forme complexe pour identifier le caractère tracé. Dans un tel système, l'utilisateur est souvent contraint d'utiliser un alphabet spécifique facilement reconnaissable.

L'article intitulé "Computer Identification of Constrained Handprinted Characters with a High Recognition Rate" de IEEE Transactions on Systems, Man, and Cybernetics, Volume SMC-4, N° 6, Novembre 1974, décrit un système de reconnaissance de caractères manuscrits où l'utilisateur doit s'efforcer de suivre des segments tracés sur le support d'écriture.

Le tracé est numérisé à haute résolution puis analysé pour trouver l'ensemble des segments qui s'en rapprochent le plus. L'ensemble des segments identifiés pour un tracé permet d'identifier ou non un caractère à l'aide d'une table.

La demande de brevet français 2 648 255 décrit un système de reconnaissance de caractères dans lequel le capteur est constitué d'une matrice de neuf zones de détection de tracé jointives. Lorsqu'un utilisateur trace un caractère sur ces zones, les excitations successives des zones sont analysées pour extraire une séquence de points singuliers du tracé, destinée à identifier le caractère tracé. Les points singuliers sont notamment les points de rupture, de rebroussement et de cambrure.

Cette technique exploite un capteur particulièrement simple, mais elle nécessite que l'utilisateur reproduise de manière fidèle un alphabet spécifique. En effet, une faible distorsion dans le tracé d'un caractère peut entraîner une variation de la séquence des points singuliers produisant une erreur d'identification. De plus, l'utilisateur ne dispose d'aucun point de repère permettant de le guider dans le tracé.

Le brevet américain 3 058 093 et la demande de brevet français 2 016 602 décrivent un système de reconnaissance de caractères offrant à l'utilisateur un support de tracé muni d'un faible nombre de points de repère par lesquels l'utilisateur doit s'efforcer de faire passer le tracé des caractères. La technique de reconnaissance consiste essentiellement à relever l'ensemble des points de repère par lesquels passe un tracé et de déduire le caractère correspondant à partir d'une table répertoriant des ensembles de points possibles.

Cette technique est peu efficace avec un faible nombre de points de repère, car un même ensemble de points détectés peut alors correspondre à plusieurs caractères si ces caractères sont écrits normalement (c'est le cas, par exemple, des lettres H, M et N avec une matrice de 3x3 points de repère).

Pour éviter cette ambiguïté, le brevet américain susmentionné propose de multiplier le nombre de points de détection afin de distinguer des particularités de certains caractères. Cette solution augmente considérablement le nombre de combinaisons de points possibles pour chaque caractère, ce qui rend le traitement informatique des ensembles de points détectés particulièrement complexe, sans pour autant résoudre toutes les ambiguïtés.

La demande de brevet français 2 016 602 susmentionnée propose, au lieu de multiplier le nombre de points de détection, de tracer les caractères ambigus de manière particulière. Ici, l'utilisateur est contraint d'apprendre un alphabet spécifique et arbitraire.

En tout cas, avec chacune de ces deux solutions, l'utilisateur doit s'efforcer de passer par des points de repère de petite dimension, ce qui est particulièrement fastidieux après une utilisation prolongée.

La demande de brevet européen 0 471 257 décrit également un système de reconnaissance de caractères manuscrits offrant des repères par lesquels l'utilisateur doit faire passer les tracés. Par contre, les détecteurs sont disposés pour détecter des segments de tracé entre les repères et non le passage des tracés par les repères. Cette solution nécessite un nombre élevé de détecteurs et ne permet pas de détecter convenablement les tracés diagonaux. En effet, la matrice de capteurs proposée ne permet pas de distinguer le sens d'inclinaison des diagonales et ne permet pas de distinguer, dans certains cas, une diagonale de deux segments perpendiculaires.

Un objet de la présente invention est de prévoir un système de reconnaissance de caractères manuscrits utilisant un capteur de faible résolution tout en garantissant une reconnaissance fiable même si les caractères tracés présentent une distorsion importante.

Cet objet est atteint par un procédé de reconnaissance de caractères ou symboles manuscrits, comprenant les étapes consistant à offrir à un utilisateur un support de tracé muni d'une matrice de repères distinctement visibles et écartés, au voisinage desquels l'utilisateur s'efforce de passer en traçant un caractère ou un symbole ; à identifier chaque segment défini par deux repères successifs dans le tracé ; et à extraire d'une table le caractère ou symbole correspondant à l'ensemble des segments identifiés sans tenir compte de l'ordre dans lequel les segments ont été tracés.

Selon un mode de réalisation de la présente invention, la table stocke, pour chaque caractère à reconnaître, plusieurs ensembles de segments possibles, correspondant à différentes formes autorisées pour le caractère.

Selon un mode de réalisation de la présente invention, chaque repère est associé à un détecteur déclenché par le passage du doigt de l'utilisateur ou d'un stylet, l'étape d'identification des segments consistant à relever la séquence des repère dans l'ordre où les détecteurs correspondants sont déclenchés, et à associer un segment à chaque couple de points successifs de la séquence.

Selon un mode de réalisation de la présente invention, la procédé comprend l'étape consistant à valider, dans un mot comprenant un bit par segment possible, les bits correspondant aux segments identifiés, les entrées de la table étant constituées de mots similaires ayant des bits adéquats validés.

Selon un mode de réalisation de la présente invention, les segments identifiés sont affichés pendant le tracé.

La présente invention vise également un dispositif de saisie de caractères manuscrits comprenant un support de saisie muni d'une matrice de repères distinctement visibles et écartés, chaque repère étant associé à un détecteur de tracé sous forme de disque.

Selon un mode de réalisation de la présente invention, le diamètre des disques est sensiblement égal à 5/6 du pas de la matrice.

Selon un mode de réalisation de la présente invention, la matrice est une matrice 3x3.

Selon un mode de réalisation de la présente invention, la matrice est une matrice 2x2 comportant un repère central supplémentaire.

Selon un mode de réalisation de la présente invention, le dispositif comporte des moyens de détection du contact du doigt ou du stylet avec le support de saisie.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1A représente un exemple de support de tracé utilisé par l'invention, comportant une matrice de disques de repère ;
la figure 1B représente des segments de tracé qu'un système de reconnaissance selon l'invention vise à détecter ;
la figure 2 représente un affichage de segments pendant des étapes successives du tracé d'une lettre sur le support de tracé de la figure 1A ; et
les figures 3A et 3B illustrent des exemples de distorsions permises dans le tracé de la lettre A avec un système de reconnaissance selon l'invention, ainsi que les contenus correspondants d'un registre de détection utilisé par l'invention.

Un système de reconnaissance de caractères manuscrits selon la présente invention est basé sur un tracé contraint des caractères, c'est-à-dire que le support sur lequel l'utilisateur doit tracer des caractères comporte des repères visibles destinés à guider l'utilisateur dans son tracé.

Les repères sont des zones espacées et distinctement visibles de dimensions propres à permettre à l'utilisateur d'y faire passer le tracé sans difficultés.

Par ailleurs, on détecte seulement le fait que le tracé passe par un repère et on ignore la forme du tracé entre deux repères. En d'autres termes, seuls les repères sont munis de détecteurs de tracé. Les détecteurs de tracé peuvent être des zones de détection de même étendue que les repères correspondants, auquel cas l'utilisateur doit faire passer le tracé par ces repères, mais les repères sont alors choisis relativement grands. Selon une alternative, les repères sont des marques au voisinage desquelles le tracé doit passer, les détecteurs étant alors des zones de détection plus étendues que les repères. Dans les deux cas, l'utilisateur n'est pas contraint de passer par des points précis en effectuant son tracé, ce qui facilite les tracés rapides et augmente le confort d'utilisation.

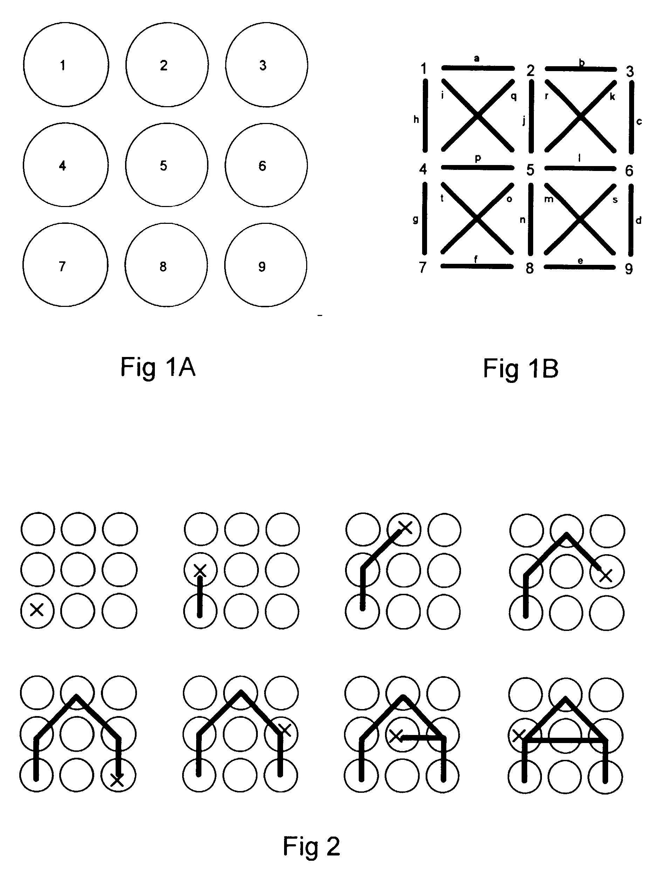

La figure 1A illustre schématiquement un exemple de support de tracé selon l'invention, tel qu'il est offert à un utilisateur. Ce support de tracé comporte une matrice d'un faible nombre de repères, par exemple neuf numérotés de 1 à 9. Les repères sont écartés les uns des autres de manière à occuper une zone de taille adaptée au mode de traçage utilisé, par exemple au doigt ou avec un stylet. Chaque repère est ici matérialisé par un disque clairement visible, et peut même comporter un repère tactile (un creux, une bosse, une rugosité...) pour le cas où les tracés sont exécutés avec le doigt.

Le support de tracé constitue un capteur dont chaque disque est un détecteur de tracé. Alors, le tracé exécuté par l'utilisateur, passant par les disques, provoque une succession de déclenchements des détecteurs. Après ce tracé, le système analyse la séquence des disques déclenchés pour identifier le caractère qu'a souhaité tracer l'utilisateur.

Selon un aspect de l'invention, on n'analyse la séquence de repères déclenchés que pour identifier les segments reliant ces repères. Dans le cas de la figure 1A, on définit, comme cela est illustré en figure 1B, vingt segments désignés a à t, reliant les repères adjacents. On préfère ne pas considérer les segments reliant les repères éloignés, par exemple les repères 1 et 6. En effet, de tels segments ne seront généralement pas utilisés pour tracer un caractère et ils sont par ailleurs difficiles à tracer sans déclencher l'un des deux disques entre lesquels le segment passe (par exemple le disque 2 ou 5 pour le segment reliant les repères 1 et 6).

La figure 2 illustre différentes étapes de tracé d'une forme de la lettre "A" sur un support selon l'invention. Le tracé passe successivement par les repères 7, 4, 2, 6, 9, 6, 5, et 4, ce qui permet d'identifier les segments d, g, l, p, q et r. La position du doigt ou d'un stylet est symbolisée par une croix. Si cela est possible, le support de tracé est de préférence prévu pour afficher les segments au fur et à mesure qu'ils sont reconnus, comme cela est illustré.

Chaque ensemble de segments identifiés lors d'un tracé permet de reconnaître un caractère sans ambiguïté et indépendamment de l'ordre d'identification de ces segments, grâce à une table de reconnaissance. Bien entendu, un même segment peut être parcouru plusieurs fois lors d'un tracé, mais seule la première identification compte. Ainsi, les entrées de la table de reconnaissance ne stockent qu'un seul ensemble de segments, sans notion d'ordre, pour chaque forme que l'on souhaite reconnaître.

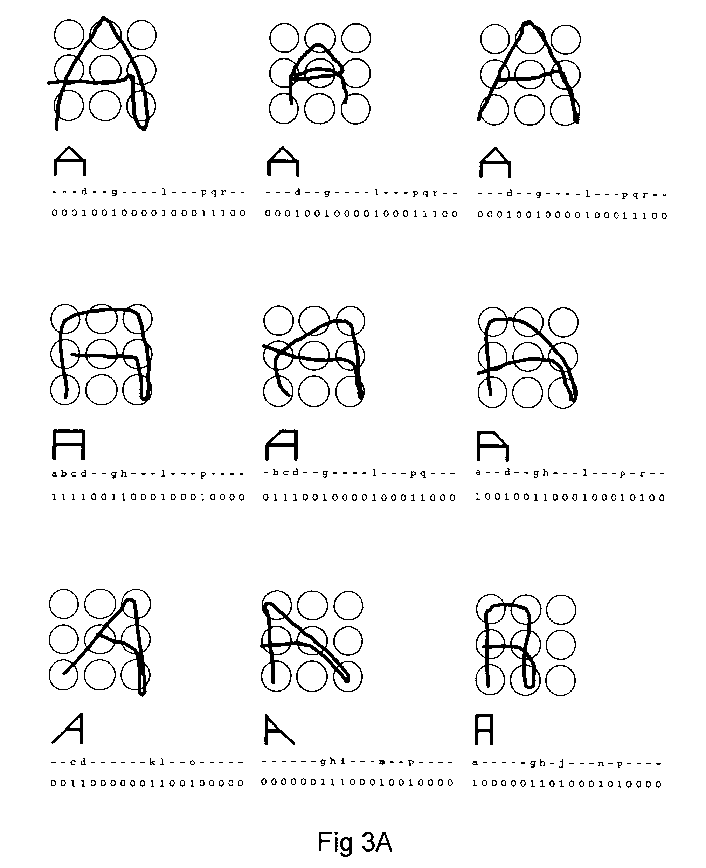

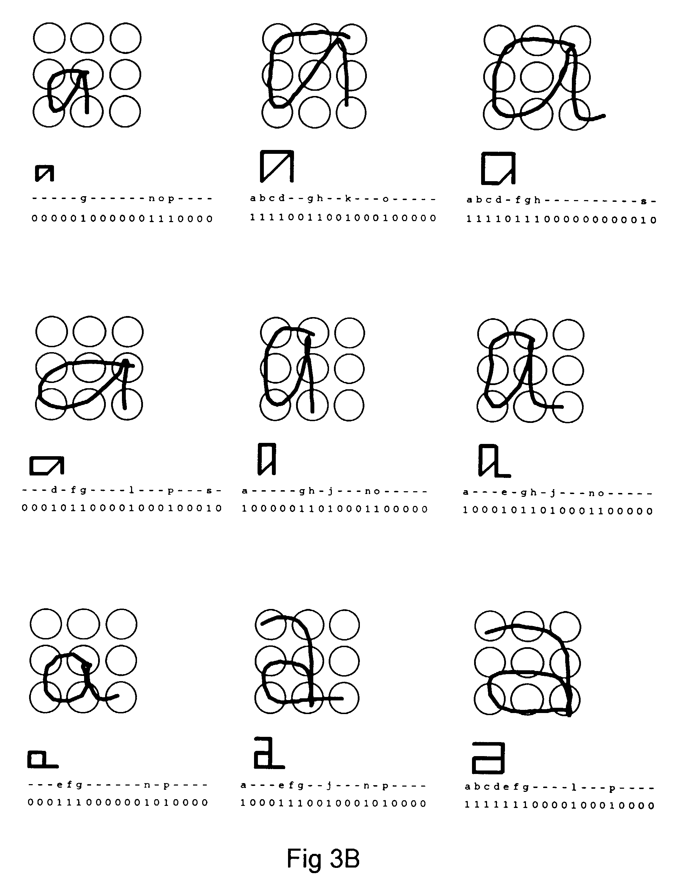

Les figures 3A et 3B illustrent, à titre d'exemple, plusieurs formes acceptables pour la lettre A. Pour accepter les différentes formes d'un caractère, il suffit de stocker les ensembles de segments correspondants dans les entrées de la table de reconnaissance.

Il existe inévitablement des possibilités de confusion entre certains caractères, par exemple entre le chiffre "0" et la lettre "O" ou "o", et entre la lettre "g" et le chiffre "9". Dans les cas ambigus, l'utilisateur sera moins libre dans le tracé et devra se conformer à un modèle et utiliser des conventions.

Pour éviter la confusion entre la lettre "g" et le chiffre "9", de formes identiques, on peut adopter une convention selon laquelle les chiffres sont écrits dans l'une des moitiés de la matrice, tandis que les lettres minuscules, au moins celles présentant un risque de confusion, sont écrites dans l'autre moitié de la matrice. On s'aperçoit que les chiffres et la plupart des lettres minuscules peuvent être tracés dans une moitié de la matrice.

Les figures 3A et 3B illustrent également une solution pour coder les ensembles de segments identifiés pour les tracés. Un ensemble de segments correspondant à une forme est codé par un mot de vingt bits, dont chaque bit est associé à l'un des segments a à t.

Pour relever un tracé, le système doit être informé des instants où se produisent le début et la fin du tracé. Plusieurs solutions peuvent être adoptées pour cela. Une solution commode et couramment utilisée consiste à détecter un début de tracé lorsque l'utilisateur pose le doigt ou le stylet sur le support de tracé, et à détecter la fin du tracé lorsque l'utilisateur lève le doigt ou le stylet. Dans ce cas, les caractères doivent être tracés d'un seul trait, c'est-à-dire sans lever le doigt ou le stylet, d'où la nécessité de passer plusieurs fois sur un même segment pour certains caractères (ceci est illustré dans les figures 3A et 3B pour certaines formes de la lettre "A").

La détection d'un début de tracé initialise le contenu du mot d'identification. La séquence de repères déclenchés au cours du tracé est mémorisée puis analysée en considérant les repères successifs par couples successifs. Chaque couple de repères identifie le segment ayant ces repères pour extrémités. Pour chaque segment ainsi identifié, le système valide le bit correspondant du mot d'identification. A la fin du tracé, ce mot d'identification est confronté aux entrées de la table de reconnaissance. Ces entrées, codées de la même manière que le mot d'identification, représentent toutes les formes acceptées du jeu de caractères choisi. Un caractère est reconnu lorsque le mot d'identification correspond à une des plusieurs entrées possibles pour ce caractère.

Quel que soit le parcours effectué pour déclencher les repères constituant une même forme d'un caractère, le contenu du mot d'identification sera le même, étant donné que l'on identifiera les mêmes segments.

Certaines formes de caractère peuvent être tracées dans un quart ou dans une moitié de la matrice. Alors, on peut ne stocker dans la table que l'un des ensembles de segments et opérer une translation sur la séquence de repères déclenchés, afin de ramener ces repères à la séquence correspondant à l'ensemble de segments que l'on a choisi de stocker.

Le choix de disques en tant que zones de détection est particulièrement avantageux. En effet, il s'avère avec ce choix que l'utilisateur peut effectuer des tracés de manière relativement libre et rapide avec peu de risques d'ambiguïté de reconnaissance. Un choix optimal de diamètre des disques est tel qu'il soit sensiblement égal à 5/6 du pas de la matrice.

Un capteur matriciel de faible résolution selon la présente invention peut être réalisé de diverses manières. Il peut être réalisé à partir d'une matrice de résolution élevée, telle que celles utilisées classiquement pour effectuer une reconnaissance de forme, sauf qu'on n'exploitera que les points détecteurs situés en dessous des disques de repère.

Lorsque les tracés sont exécutés avec le doigt, les disques peuvent être constitués de capteurs capacitifs individuels, l'espace entre les disques constituant également un capteur capacitif pour détecter la présence ou l'absence du doigt.

Les disques peuvent être affichés sur un écran tactile.

Au lieu d'afficher le trajet réel suivi par le doigt ou le stylet, comme le font habituellement les systèmes de reconnaissance d'écriture à capteur matriciel de haute résolution, il est préférable d'afficher les segments, et ceci au fur et à mesure de leur identification comme l'illustre la figure 2. Cela guide l'utilisateur et fournit une solution simple au problème qui est d'informer l'utilisateur de la raison pour laquelle un tracé incorrect n'est pas reconnu. Avec les procédés classiques, il est fréquent que l'utilisateur répète sans cesse la même erreur parce qu'il ne peut savoir pourquoi son tracé est incorrect. Les segments peuvent être affichés sur le support de tracé lui-même, ou sur un écran, près de caractères précédemment reconnus.

De nombreuses options de la présente invention apparaîtront à l'homme du métier. Par exemple, le contenu de la table de reconnaissance peut être modifiable par l'utilisateur afin que celui-ci puisse programmer des symboles non initialement prévus dans le jeu de caractères à reconnaître, ou ajouter des formes "abrégées" qui doivent être reconnues comme des caractères spécifiques.

La table, en plus de permettre la reconnaissance de caractères, peut être prévue pour signaler au système d'exécuter des actions lorsque des symboles spécifiques sont reconnus. De cette manière, par exemple, il pourra être prévu que le tracé d'un symbole spécifique entraîne l'effacement du dernier caractère reconnu.

La matrice de repères a été décrite comme une matrice 3x3. Ce choix permet d'obtenir une table de reconnaissance de relativement faible taille pour les caractères latins et chiffres arabes. Bien entendu, si le jeu de caractères est plus complexe, on pourra prévoir des matrices plus grandes, par exemple 5x5 ou plus. A l'inverse, si l'on désire utiliser une écriture simplifiée selon un alphabet spécifique (afin d'augmenter la vitesse de tracé) on pourra utiliser une matrice 2x2 avec un cinquième repère en son centre.

## Revendications

1. Procédé de reconnaissance de caractères ou symboles manuscrits, utilisant un support de tracé muni d'une matrice de repères (1-9) distinctement visibles et écartés, au voisinage desquels un utilisateur s'efforce de passer en traçant un caractère ou un symbole ;
caractérisé en ce qu'il comprend les étapes suivantes :
- identifier chaque segment (a-t) défini par deux repères successifs rencontrés dans le tracé ; et
- extraire d'une table le caractère ou symbole correspondant à l'ensemble des segments identifiés sans tenir compte de l'ordre dans lequel les segments ont été tracés.

2. Procédé de reconnaissance selon la revendication 1, caractérisé en ce que la table stocke, pour chaque caractère à reconnaître, plusieurs ensembles de segments possibles, correspondant à différentes formes autorisées pour le caractère.

3. Procédé de reconnaissance selon la revendication 1 ou 2, caractérisé en ce que chaque repère est associé à un détecteur déclenché par le passage du doigt de l'utilisateur ou d'un stylet, l'étape d'identification des segments consistant à relever la séquence des repères dans l'ordre où les détecteurs correspondants sont déclenchés, et à associer un segment à chaque couple de repères successifs de la séquence.

4. Procédé de reconnaissance selon l'une quelconque des revendication 1 à 3, caractérisé en ce qu'il comprend l'étape consistant à valider, dans un mot comprenant un bit par segment possible, les bits correspondant aux segments identifiés, les entrées de la table étant constituées de mots similaires ayant des bits adéquats validés.

5. Procédé de reconnaissance selon la revendication 1, caractérisé en ce que les segments identifiés sont affichés pendant le tracé.

6. Dispositif de saisie de caractères manuscrits comprenant un support de saisie muni d'une matrice de repères (1-9) distinctement visibles et écartés, chaque repère étant associé à un détecteur de tracé sous forme de disque.

7. Dispositif de saisie selon la revendication 6, caractérisé en ce que le diamètre des disques est sensiblement égal à 5/6 du pas de la matrice.

8. Dispositif de saisie selon la revendication 6 ou 7, caractérisé en ce que la matrice est une matrice 3x3.

9. Dispositif de saisie selon la revendication 6 ou 7, caractérisé en ce que la matrice est une matrice 2x2 comportant un repère central supplémentaire.

10. Dispositif de saisie selon la revendication 6, caractérisé en ce qu'il comporte des moyens de détection du contact du doigt ou du stylet avec le support de saisie.
